# EUROPÄISCHE PATENTSCHRIFT

(11) **EP 2 874 844 B1**
(45) Veröffentlichungstag und Bekanntmachung des Hinweises auf die Patenterteilung: **09.03.2016**
(21) Anmeldenummer: 13737537.4
(22) Anmeldetag: 10.07.2013
(51) Int. Cl.: B60K 35/00, B60K 37/02, B60Q 3/04, H05B 39/04, G01D 11/28, G01D 18/00, G02F 1/13, G09G 3/00, G09G 3/36, H05B 37/02

(54) **ANZEIGEVORRICHTUNG EINES KRAFTWAGENS SOWIE VERFAHREN ZUM BETREIBEN EINER SOLCHEN ANZEIGEVORRICHTUNG**
DISPLAY DEVICE OF A MOTOR VEHICLE AND METHOD FOR OPERATING A DISPLAY DEVICE OF THIS TYPE
DISPOSITIF D'AFFICHAGE D'UN VÉHICULE À MOTEUR AINSI QUE PROCÉDÉ DE COMMANDE D'UN TEL DISPOSITIF D'AFFICHAGE

(30) Priorität: 20.07.2012 DE 102012014352
(43) Veröffentlichungstag der Anmeldung: 27.05.2015
(73) Patentinhaber: Audi AG, 85045 Ingolstadt (DE)
(72) Erfinder: SCHWANTNER, Stephan, 85125 Haunstetten Eichstätt (DE)
(74) Vertreter: Brandt, Kai
(86) Internationale Anmeldenummer: PCT/EP2013/002028
(87) Internationale Veröffentlichungsnummer: WO 2014/012635

(56) Entgegenhaltungen:
- EP-A1- 2 293 284
- WO-A1-2005/025921
- WO-A2-2007/069107
- DE-A1- 3 245 299
- DE-T2- 60 132 662
- US-A1- 2007 279 369

## Beschreibung

Die Erfindung betrifft eine Anzeigevorrichtung eines Kraftwagens gemäß dem Oberbegriff des Patentanspruchs 1 sowie ein Verfahren zum Betreiben einer solchen Anzeigevorrichtung gemäß dem Oberbegriff des Patentanspruchs 6.

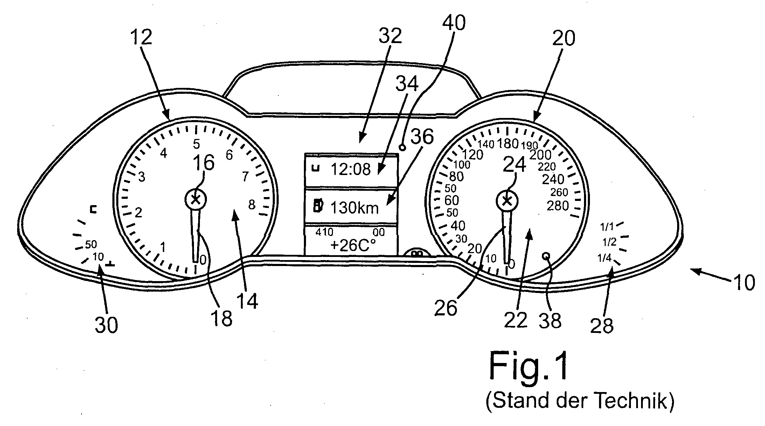

Derartige Anzeigevorrichtungen von Kraftwagen sowie Verfahren zum Betreiben solcher Anzeigevorrichtungen sind aus dem Serienbau von Kraftwagen, insbesondere Personenkraftwagen, hinlänglich bekannt. Fig. 1 zeigt eine solche Anzeigevorrichtung 10 gemäß dem Stand der Technik in einer schematischen Vorderansicht. Die Anzeigevorrichtung 10 wird üblicherweise auch als Kombiinstrument bezeichnet und bei Personenkraftwagen der Marke AUDI verwendet.

Die Anzeigevorrichtung 10 umfasst ein erstes Anzeigeelement 12 in Form eines sogenannten Drehzahlmessers, mittels welchem Werte einer Drehzahl einer Verbrennungskraftmaschine zum Antreiben des Personenkraftwagens anzeigbar sind. Dazu umfasst das Anzeigeelement 12 eine Werteskala 14 mit den Werten für die Drehzahl sowie einen um eine Schwenkachse 16 entlang der Werteskala 14 verschwenkbaren Zeiger 18. Der Zeiger 18 zeigt dabei den aktuellen Wert der Drehzahl an. Vorliegend ist die Verbrennungskraftmaschine deaktiviert, so dass der Wert der Drehzahl 0 beträgt.

Die Anzeigevorrichtung 10 umfasst ein zweites Anzeigeelement 20 in Form eines sogenannten Tachometers, mittels welchem Werte einer Fahrzeuggeschwindigkeit des Personenkraftwagens anzeigbar sind. Dazu umfasst das Anzeigeelement 20 eine Werteskala 22 mit Werten der Fahrzeuggeschwindigkeit sowie einen um eine Schwenkachse 24 entlang der Werteskala 22 verschwenkbaren Zeiger 26. Mittels des Zeigers 26 ist der aktuelle Wert der Fahrzeuggeschwindigkeit anzeigbar. Vorliegend steht der Personenkraftwagen, so dass der Wert der Fahrzeuggeschwindigkeit 0 beträgt.

Die Anzeigevorrichtung 10 umfasst auch ein drittes Anzeigeelement 28 zum Anzeigen von Werten, die einen Füllstand eines Kraftstofftanks des Personenkraftwagens charakterisieren. Darüber hinaus ist ein viertes Anzeigeelement 30 zum Anzeigen von Werten einer Kühlflüssigkeitstemperatur oder einer Schmieröltemperatur vorgesehen.

Weiterhin umfasst die Anzeigevorrichtung 10 ein fünftes Anzeigeelement 32, welches als Flüssigkeitskristallbildschirm zum Anzeigen von unterschiedlichen Werten ausgebildet ist. Einer dieser Werte ist vorliegend die aktuelle Uhrzeit 34. Ein weiterer dieser Werte ist eine Reichweite 36, über welche der Personenkraftwagen von der Verbrennungskraftmaschine unter Nutzung einer im Kraftstofftank verbleibenden Menge des Kraftstoffes noch angetrieben werden kann.

Das Anzeigen der jeweiligen Werte durch die Anzeigeelemente 12, 20, 28, 30, 32 erfolgt dabei unter Abstrahlen von Lichtstrahlen durch das jeweilige Anzeigeelement 12, 20, 28, 30, 32. Dies bedeutet beispielsweise, dass der Flüssigkeitskristallbildschirm (Anzeigeelement 32) Lichtstrahlen abstrahlt, um die aktuelle Uhrzeit 34 und die Reichweite 36 anzuzeigen. Zum Abstrahlen der entsprechenden Lichtstrahlen weisen die Anzeigeelemente 12, 20, 28, 30, 32 beispielsweise jeweils wenigstens ein Leuchtelement auf.

Um für den Fahrer des Personenkraftwagens angenehme Helligkeitsbedingungen zu schaffen, kann eine jeweilige Anzeigehelligkeit der jeweiligen Anzeigeelemente 12, 20, 28, 30, 32 eingestellt werden. Bei hellen Umgebungsbedingungen wird beispielsweise eine hohe Anzeigehelligkeit eingestellt, während bei demgegenüber dunklen Umgebungsbedingungen geringere Anzeigehelligkeiten eingestellt werden.

Die Anzeigevorrichtung 10 (Kombiinstrument) umfasst auch eine in Fig. 1 nicht erkennbare Erfassungseinrichtung mit einer Steuereinheit und wenigstens einem Erfassungselement 38 zum Erfassen einer Umgebungshelligkeit einer Umgebung der Anzeigeelemente 12, 20, 28, 30, 32.

Im Rahmen des Verfahrens zum Betreiben der Anzeigevorrichtung 10 wird dabei die jeweilige Anzeigehelligkeit mittels der Steuereinheit in Abhängigkeit von wenigstens einem, die erfasste Umgebungshelligkeit charakterisierenden und von dem Erfassungselement an die Steuereinheit übertragenen Signal eingestellt. Bei dem Erfassungselement 38 handelt es sich beispielsweise um eine Fotodiode oder um einen Fototransistor.

Die Anzeigevorrichtung 10 umfasst auch ein weiteres Erfassungselement 40, welches von dem Fahrer oder von anderweitigen Fahrzeuginsassen im Fahrgastraum des Personenkraftwagens nicht sichtbar ist und in Fig. 1 lediglich dargestellt ist, um seine Funktion anschaulich erläutern zu können. Das weitere Erfassungselement 40 dient dazu, den Flüssigkeitskristallbildschirm (Anzeigeelement 32) auf seine Funktionsfähigkeit zu überprüfen. Dabei ist das Erfassungselement 40 beispielsweise als Fototransistor ausgebildet.

Die Verwendung des zusätzlichen Erfassungselements 40 zum Überprüfen der Funktionsfähigkeit des Anzeigeelements 32 erfordert sowohl zusätzlichen Entwicklungs- als auch Verkabelungs- und Bauraumaufwand.

Auch aus der DE 103 41 622 B3 ist ein Anzeigeinstrument für ein Kraftfahrzeug bekannt. Das Anzeigeelement umfasst einen Lichtleiter zur Erfassung des Umgebungslichts mit einem Sensor, der an dem Lichtleiter angeordnet ist und in Abhängigkeit des erfassten Umgebungslichtes ein Steuersignal zur Helligkeitssteuerung des Anzeigeelements an eine Auswerteschaltung abgibt. Des Weiteren ist der DE 101 60 296 A1 eine Anzeigevorrichtung mit einem Lichtleiter als bekannt zu entnehmen, wobei der Lichtleiter in der Anzeigevorrichtung gelagert ist. Über den Lichtleiter kann eine Umgebungshelligkeit gemessen werden. In Abhängigkeit von der gemessenen Umgebungshelligkeit kann dann die Helligkeit der Anzeigevorrichtung eingestellt werden.

Auch die DE 32 45 299 A1 offenbart eine Anzeigevorrichtung in Kraftfahrzeugen mit einer Steuerung der Helligkeit der Anzeigevorrichtung in Abhängigkeit von dem aus dem Beobachtungsraum auf die Anzeige gelangenden Licht. Ferner ist außerdem ein die Leuchtdichte des Umfelds in Blickrichtung des Fahrers erfassender Fotodetektor vorgesehen, der abhängig davon die Helligkeit der Anzeigevorrichtung über eine Steuerschaltung nachführt.

Derartige Anzeigevorrichtungen sind auch aus der JP 2002071395 A sowie aus der DE 10 2009 036 316 A1 bekannt. Eine Anzeigevorrichtung mit den Merkmalen des Oberbegriffs der Ansprüche 1 und 6 ist aus der WO 2005/025921 A1 bekannt.

Es ist Aufgabe der vorliegenden Erfindung, eine Anzeigevorrichtung sowie ein Verfahren zum Betreiben einer solchen Anzeigevorrichtung der eingangs genannten Art derart weiterzuentwickeln, dass die Anzeigevorrichtung eine besonders geringe Komplexität aufweist.

Diese Aufgabe wird durch eine Anzeigevorrichtung mit den Merkmalen des Patentanspruchs 1 sowie durch ein Verfahren zum Betreiben einer solchen Anzeigevorrichtung mit den Merkmalen des Patentanspruchs 6 gelöst. Vorteilhafte Ausgestaltungen mit zweckmäßigen und nicht-trivialen Weiterbildungen der Erfindung sind in den übrigen Ansprüchen angegeben.

Der erste Aspekt der Erfindung betrifft eine Anzeigevorrichtung eines Kraftwagens, insbesondere eines Personenkraftwagens, mit wenigstens einem Anzeigeelement. Mittels des Anzeigeelements ist unter Abstrahlen von Lichtstrahlen durch das Anzeigeelement zumindest ein Wert, wenigstens eine Grafik, wenigstens ein Buchstabe oder dergleichen anzeigbar. Das Anzeigeelement ist dabei in seiner Anzeigehelligkeit einstellbar. Die Anzeigevorrichtung umfasst ferner eine Erfassungseinrichtung mit einer Steuereinheit und wenigstens einem Erfassungselement zum Erfassen einer Umgebungsheiligkeit einer Umgebung des Anzeigeelements. Dabei ist die Anzeigehelligkeit des Anzeigeelements mittels der Steuereinheit in Abhängigkeit von wenigstens einem, die erfasste Umgebungshelligkeit charakterisierenden und von dem Erfassungselement an die Steuereinheit übertragenen Signal einstellbar.

Um die Teileanzahl und somit die Komplexität und somit die Kosten und das Gewicht der Anzeigevorrichtung besonders gering zu halten, ist es erfindungsgemäß vorgesehen, dass das Erfassungselement dazu ausgelegt ist, vom Anzeigeelement abgestrahlte Lichtstrahlen zu erfassen und wenigstens ein, die erfassten Lichtstrahlen charakterisierendes Auswertesignal an die Steuereinheit zu übertragen. Mittels der Steuereinheit ist dabei in Abhängigkeit von dem Auswertesignal das Anzeigeelement auf dessen Funktionsfähigkeit überprüfbar. Dadurch kann ein zusätzliches Erfassungselement zum Überprüfen des Anzeigeelements auf dessen Funktionsfähigkeit vermieden werden. Damit einher geht die Vermeidung von zusätzlichem Verkabelungsaufwand. Darüber hinaus muss kein zusätzlicher Bauraum für das zusätzliche Erfassungselement vorgesehen werden.

Bei der erfindungsgemäßen Anzeigevorrichtung ist eine Funktionsintegration geschaffen, infolge derer dem Erfassungselement eine Doppelfunktion zukommt. Zum einen erfüllt das Erfassungselement die Aufgabe, die Umgebungshelligkeit zu erfassen, so dass die Anzeigehelligkeit in Abhängigkeit von der Umgebungshelligkeit eingestellt werden kann. Zum anderen dient das Erfassungselement dazu, von dem Anzeigeelement ausgestrahlte Lichtstrahlen zu erfassen und in Abhängigkeit von dieser Erfassung das Anzeigeelement auf seine Funktionsfähigkeit zu überprüfen. Mit anderen Worten kann mittels des Erfassungselements auch überprüft werden, ob mittels des Anzeigeelements wenigstens ein Wert und/oder eine Grafik und/oder Text und/oder dergleichen angezeigt werden kann.

Erfindungsgemäß ist wenigstens ein erster Lichtleiter vorgesehen, mittels welchem dem Erfassungselement Lichtstrahlen aus der Umgebung zuführbar sind. Des Weiteren ist wenigstens ein zweiter Lichtleiter vorgesehen, mittels welchem dem Erfassungselement die vom Anzeigeelement abgestrahlten Lichtstrahlen zuführbar sind.

Mit anderen Worten ist die Umgebungshelligkeit über den ersten Lichtleiter mittels des Erfassungselements erfassbar, während die vom Anzeigeelement ausgestrahlten Lichtstrahlen über den zweiten Lichtleiter mittels des Erfassungselements erfassbar sind. Dazu werden die Lichtstrahlen aus der Umgebung über den ersten Lichtleiter zum Erfassungselement geleitet. Der zweite Lichtleiter dient dazu, die vom Anzeigeelement abgestrahlten Lichtstrahlen zum Erfassungselement zu führen. Durch die Verwendung von Lichtleitern ist es möglich, die Lichtstrahlen aus der Umgebung und die vom Anzeigeelement abgestrahlten Lichtstrahlen an jeweiligen, relativ weit voneinander beabstandeten Stellen zu erfassen, da die jeweiligen Lichtstrahlen von den voneinander beabstandeten Stellen zu dem einen Erfassungselement geführt werden können.

Somit ist es beispielsweise möglich, eine gegenseitige Beeinflussung der Erfassung der Umgebungshelligkeit und der Erfassung der vom Anzeigeelement abgestrahlten Lichtstrahlen zu vermeiden, so dass in der Folge fehlerhafte Veränderungen der Anzeigehelligkeit sowie Falschaussagen über die Funktionsfähigkeit des Anzeigeelements vermieden werden können. Dies führt zu einer qualitativ sehr guten Funktionsfähigkeit der Anzeigevorrichtung, da sowohl präzise auf die Umgebungshelligkeit und insbesondere ihre Veränderung sowie besonders präzise bzw. aussagekräftig auf die Funktionsfähigkeit des Anzeigeelements rückgeschlossen werden kann.

Als besonders vorteilhaft hat es sich gezeigt, wenn das Anzeigeelement eine Anzeigefläche aufweist, über welche Lichtstrahlen vom Anzeigeelement abstrahlbar sind, wobei das Anzeigeelement dazu ausgelegt ist, in einem Teilbereich der Anzeigefläche die mittels des Erfassungselements erfassbaren Lichtstrahlen abzustrahlen. Hierbei wird nicht die gesamte Anzeigefläche des Anzeigeelements, sondern lediglich der Teilbereich genutzt, um das Anzeigeelement auf seine Funktionsfähigkeit zu überprüfen. Dadurch kann das Abstrahlen der Lichtstrahlen mittels des Anzeigeelements, welche zum Überprüfen der Funktionsfähigkeit des Anzeigeelements verwendet werden, unabhängig vom Anzeigen beispielsweise eines Werts durch das Anzeigeelement durchgeführt werden.

Mit anderen Worten wird das Anzeigen beispielsweise des Werts durch das Anzeigeelement nicht von dem Abstrahlen der Lichtstrahlen durch das Anzeigeelement, welche zum Überprüfen der Funktionsfähigkeit des Anzeigeelements verwendet werden, beeinflusst. Darüber hinaus kann der Teilbereich besonders klein und somit optisch nicht oder nur sehr geringfügig von dem Fahrer des Personenkraftwagens wahrnehmbar sein, während die gesamte Anzeigefläche besonders groß ausgestaltet werden kann, um wenigstens einen Wert und/oder Text und/oder wenigstens eine Grafik für den Fahrer gut sichtbar anzeigen zu können.

Bei dem Anzeigeelement handelt es sich beispielsweise um einen Flüssigkeitskristallbildschirm, wobei der Teilbereich der Anzeigefläche, in dem die Lichtstrahlen, welche zum Überprüfen der Funktionsfähigkeit des Flüssigkeitskristallbildschirms genutzt werden, von diesem abgestrahlt werden, eine nur geringe Anzahl an Bildpunkten des Flüssigkeitskristallbildschirms, sogenannte Pixel, umfasst.

Mittels des Erfassungselements ist es beispielsweise möglich, das Anzeigeelement auf seine grundsätzliche Funktionsfähigkeit, überhaupt Lichtstrahlen abstrahlen und somit wenigstens einen Wert anzeigen zu können, zu überprüfen.

In weiterer Ausgestaltung der Erfindung hat es sich als besonders vorteilhaft gezeigt, wenn die Steuereinheit dazu ausgelegt ist, eine Intensität der mittels des Erfassungselements erfassbaren und vom Anzeigeelement abgestrahlten Lichtstrahlen innerhalb einer vorgebbaren Zeitdauer zu variieren. Mit anderen Worten ist hierbei eine Hell-Dunkel-Taktung des Anzeigeelements realisiert, wobei die Intensität der mittels des Erfassungselements erfassbaren und vom Anzeigeelement abgestrahlten Lichtstrahlen während einer HellPhase der Hell-Dunkel-Taktung höher ist als während einer Dunkelphase der Hell-Dunkel-Taktung. Dadurch kann das Anzeigeelement insbesondere dahingehend überprüft werden, ob eine Veränderung des Werts bzw. der Grafik und/oder die Darstellung eines anderen Werts bzw. einer anderen Grafik möglich ist oder nicht.

Infolge der Hell-Dunkel-Taktung wird das Auswertesignal entsprechend moduliert. Ist eine Veränderung oder ein Wechsel des Werts bzw. der Grafik nicht mehr möglich, so sind auch die Hell-Dunkel-Taktung und die entsprechende Modulierung des Auswertesignals nicht mehr möglich. Dies wird auf dem Gebiet von Computern üblicherweise als "Einfrieren" oder als "Aufhängen" des Anzeigeelements bezeichnet. Ist dies der Fall, so kommt es trotz entsprechender Ansteuerung des Anzeigeelements durch die Steuereinheit nicht zu abwechselnden Hell- und Dunkelphasen innerhalb der vorgebbaren Zeitdauer, sondern während der vorgebbaren Zeitdauer liegt lediglich die Hellphase oder die Dunkelphase vor. In der Folge ist das Auswertesignal zumindest im Wesentlichen konstant, da das Anzeigeelement zumindest in dem Teilbereich konstant hell oder konstant dunkel ist. Als eine Folge davon kann auf eine Fehlfunktion des Anzeigeelements rückgechlossen werden, so dass beispielsweise entsprechenden Gegenmaßnahmen eingeleitet werden können.

Das Anzeigeelement kann hierbei grundsätzlich noch intakt und in der Lage sein, Lichtstrahlen abzustrahlen, jedoch ist lediglich ein Wechsel des Werts bzw. der Anzeige nicht mehr möglich. Um einen solchen Wechsel wieder zu ermöglichen, kann beispielsweise das Anzeigeelement kurzzeitig deaktiviert und wieder aktiviert werden. Wird im Gegensatz dazu ein vollständiger Defekt des Anzeigeelements erfasst, so dass das Anzeigeelement keine Lichtstrahlen mehr abstrahlen kann, so kann dies beispielsweise in einem Fehlerspeicher hinterlegt und/oder dem Fahrer durch ein Hinweissignal kommuniziert werden.

Eine besonders präzise und aussagekräftige Überprüfung des Anzeigeelements auf seine Funktionsfähigkeit ist insbesondere dann geschaffen, wenn die Steuereinheit dazu ausgelegt ist, die Intensität innerhalb der vorgebbaren Zeitdauer wenigstens einmalig auf Null zu reduzieren. Mit anderen Worten werden hierbei während der Dunkelphase der Hell-Dunkel-Taktung keine Lichtstrahlen mittels des Anzeigeelements abgestrahlt. Dadurch kann ein deutlicher Unterschied hinsichtlich der Intensität der Lichtstrahlen im Vergleich zur Hell-Phase bewirkt werden, so dass die Hellphase deutlich von der Dunkelphase unterschieden werden kann.

Zur Erfindung gehört auch ein Kraftwagen, insbesondere ein Personenkraftwagen, mit einer erfindungsgemäßen Anzeigevorrichtung, wobei aufgrund der Verwendung des Erfassungselements sowohl zum Erfassen der Umgebungshelligkeit als auch zum Überprüfen des Anzeigeelements auf seine Funktionsfähigkeit Kosten bei dem Kraftwagen eingespart werden können. Der zweite Aspekt der Erfindung betrifft ein Verfahren zum Betreiben einer Anzeigevorrichtung eines Kraftwagens mit den Merkmalen des Anspruchs 6, insbesondere eines Personenkraftwagens, mit wenigstens einem Anzeigeelement, mittels welchem unter Abstrahlen von Lichtstrahlen durch das Anzeigeelement zumindest ein Wert, eine Grafik, wenigstens ein Buchstabe oder dergleichen anzeigbar ist und welches in seiner Anzeigehelligkeit einstellbar ist. Die Anzeigevorrichtung umfasst auch eine Erfassungseinrichtung mit einer Steuereinheit und wenigstens einem Erfassungselement zum Erfassen einer Umgebungshelligkeit einer Umgebung des Anzeigeelements. Dabei ist die Anzeigehelligkeit mittels der Steuereinheit in Abhängigkeit von wenigstens einem, die erfasste Umgebungshelligkeit charakterisierenden und von dem Erfassungselement an die Steuereinheit übertragenen Signal einstellbar.

Zur Realisierung einer besonders geringen Komplexität und somit besonders geringer Kosten der Anzeigevorrichtung ist beim zweiten Aspekt der Erfindung vorgesehen, dass vom Anzeigeelement abgestrahlte Lichtstrahlen mittels des Erfassungselements erfasst werden, wobei von dem Erfassungselement wenigstens ein, die erfassten Lichtstrahlen charakterisierendes Auswertesignal an die Steuereinheit übertragen wird. Mittels der Steuereinheit wird in Abhängigkeit von dem Auswertesignal das Anzeigeelement auf dessen Funktionsfähigkeit überprüft. Vorteilhafte Ausgestaltungen des ersten Aspekts der Erfindung sind als vorteilhafte Ausgestaltungen des zweiten Aspekts der Erfindung anzusehen und umgekehrt.

Im Rahmen des erfindungsgemäßen Verfahrens zum Betreiben der Anzeigevorrichtung, welche üblicherweise auch als Kombiinstrument bezeichnet wird, wird somit das Erfassungselement sowohl zum Einstellen der Anzeigehelligkeit und somit zum Anpassen der Anzeigehelligkeit an die Umgebungshelligkeit als auch zur Funktionsüberwachung des Anzeigeelements genutzt.

Um das Anzeigeelement auf seine Funktionsfähigkeit zu überprüfen bzw. zu überwachen, dient das Anzeigeelement selbst, insbesondere wenigstens ein Leuchtelement des Anzeigeelements, als Lichtquelle, mittels welcher Lichtstrahlen vom Anzeigeelement abgestrahlt werden. Die abgestrahlten Lichtstrahlen werden mittels des Erfassungselements erfasst und durch das Auswertesignal charakterisiert. Hierbei ist es anhand des Auswertesignals möglich zu ermitteln, ob das Anzeigeelement die Lichtstrahlen auch tatsächlich abstrahlt oder nicht. Mit anderen Worten kann die Erfassung der Lichtstrahlen mittels des Erfassungselements auch ergeben, dass das Anzeigeelement keine Lichtstrahlen abstrahlt bzw. abstrahlen kann. Dazu kann es beispielsweise dann kommen, wenn das Anzeigeelement im Rahmen der HellDunkel-Taktung in der Dunkelphase "eingefroren" ist.

Aufgrund dieser Doppelnutzung des Erfassungselements können zusätzliche Erfassungselemente sowie damit einhergehender Verkabelungs- und Bauraumaufwand vermieden werden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Vorderansicht einer Anzeigevorrichtung eines Personenkraftwagens gemäß dem Stand der Technik;
- Fig. 2: eine schematische Vorderansicht einer weiteren Ausführungsform der Anzeigevorrichtung, bei welcher ein Erfassungselement einer Erfassungseinrichtung sowohl zum Einstellen einer Anzeigehelligkeit wenigstens eines Anzeigeelements der Anzeigevorrichtung als auch zum Überprüfen des Anzeigeelements auf seine Funktionsfähigkeit genutzt wird; und
- Fig. 3: eine schematische Schnittansicht der Anzeigevorrichtung gemäß Fig. 2.

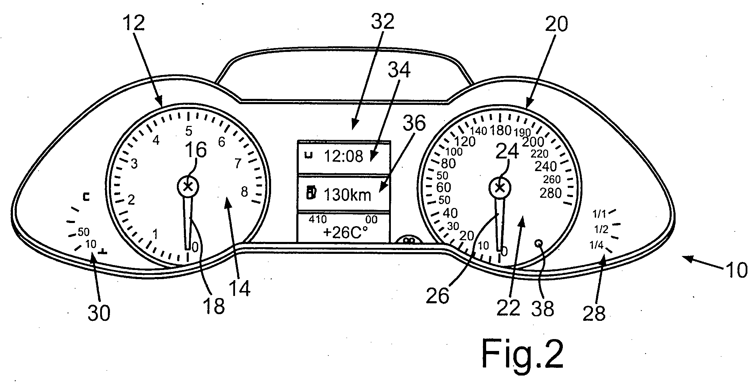

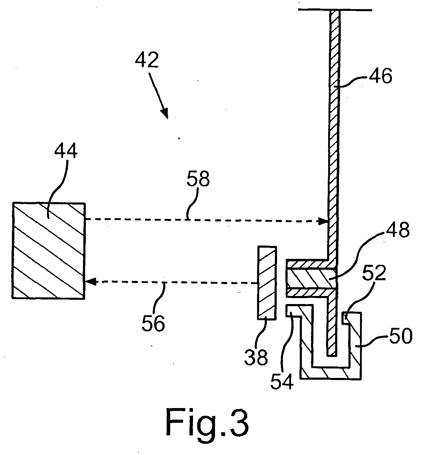

Die Anzeigevorrichtung 10 gemäß Fig. 2 und 3 unterscheidet sich lediglich in Teilen von der Anzeigevorrichtung 10 gemäß Fig. 1, wobei im Folgenden lediglich auf die Unterschiede eingegangen wird. Dabei bezeichnen gleiche Bezugszeichen in den Figuren gleiche und/oder funktionsgleiche Elemente.

Die Anzeigevorrichtung 10 gemäß Fig. 2 unterscheidet sich nun dahingehend von der Anzeigevorrichtung 10 gemäß Fig. 1, dass das Erfassungselement 38 dazu ausgelegt ist, wenigstens von einem der Anzeigeelemente 12, 20, 28, 30, 32 abgestrahlte Lichtstrahlen zu erfassen und wenigstens ein, die erfassten Lichtstrahlen charakterisierendes Auswertesignal an die Steuereinheit zu übertragen. Mittels der Steuereinheit ist in Abhängigkeit von dem Auswertesignal das Anzeigeelement 12, 20, 28, 30, 32 auf dessen Funktionsfähigkeit überprüfbar.

Wie in Zusammenschau mit Fig. 1 erkennbar ist, kann dadurch das weitere, zusätzliche Erfassungselement 40 sowie durch das Erfassungselement 40 bedingter Bauraum- und Verkabelungsaufwand entfallen.

Das Erfassungselement 38, welches beispielsweise als Fototransistor ausgebildet ist, wird somit nicht nur dazu genutzt, die Umgebungshelligkeit zu erfassen und in Abhängigkeit von der erfassten Umgebungshelligkeit die Anzeigehelligkeit einzustellen bzw. zu verändern. Das Erfassungselement 38 wird nun auch dazu verwendet, beispielsweise von dem als Flüssigkeitskristallbildschirm ausgebildeten Anzeigeelement 32 abgestrahlte Lichtstrahlen zu erfassen und in Abhängigkeit davon das Anzeigeelement 32 (Flüssigkeitskristallbildschirm) auf dessen Funktionsfähigkeit zu überprüfen.

Das Funktionsprinzip des Erfassungselements 38 ist besonders gut anhand von Fig. 3 erkennbar. In Fig. 3 ist die Steuereinheit der Anzeigevorrichtung 10 erkennbar, welche mit 42 bezeichnet ist. In Fig. 3 ist auch die Steuereinheit der Erfassungseinrichtung 32 erkennbar, welche mit 44 bezeichnet ist. In Fig. 3 ist auch ein aus einem Kunststoff gebildetes Blendenelement 46 der Anzeigevorrichtung 10 erkennbar. Das Blendenelement 46 weist eine Durchtrittsöffnung auf, welche in Überdeckung mit dem Anzeigeelement 32 angeordnet ist. Dadurch wird das Anzeigeelemente 32 nicht durch das Blendenelement 46 abgedeckt.

Wie aus Fig. 3 erkennbar ist, umfasst die Erfassungseinrichtung 32 einen ersten Lichtleiter 48, über welchen Lichtstrahlen aus der Umgebung der Anzeigevorrichtung 10 dem Fototransistor (Erfassungselement 38) zugeführt werden. Dadurch kann das Erfassungselement 38 die Lichtstrahlen aus der Umgebung über den ersten Lichtleiter 48 erfassen.

Weiterhin umfasst die Erfassungseinrichtung 42 einen zweiten Lichtleiter 50, dessen erstes Ende 52 auf das Anzeigeelement 32 ausgerichtet ist, d.h. in Überdeckung mit dem Anzeigeelement 32 angeordnet ist. Ein zweites Ende 54 des zweiten Lichtleiters 50 ist in Überdeckung mit dem Erfassungselement 38 angeordnet, so dass die vom Anzeigeelement abgestrahlten Lichtstrahlen mittels des zweiten Lichtleiters 50 zum Erfassungselement 38 geführt werden und in der Folge vom Erfassungselement 38 erfasst werden können.

Ein Richtungspfeil 56 in Fig. 3 veranschaulicht eine Kopplung des Erfassungselements 38 mit der Steuereinheit 44, so dass das Auswertesignal vom Erfassungselement 38 an die Steuereinheit 44 übertragen werden kann. Ein Richtungspfeil 58 deutet eine Kopplung der Steuereinheit 44 zumindest mit dem Anzeigeelement 32 an, über welche das Anzeigeelement 32 mittels der Steuereinheit 44 in seine Anzeigehelligkeit eingestellt, d.h. verändert sowie zur Bewirkung der Hell-Dunkel-Taktung angesteuert werden kann.

Zum Überprüfen der Funktionsfähigkeit des Anzeigeelements 32 auf dessen Funktionsfähigkeit wird dabei nicht eine gesamte Anzeigefläche des Anzeigeelements 32, auf welcher Werte und/oder Texte und/oder Grafiken angezeigt werden, genutzt. Vielmehr wird ein Teilbereich der Anzeigefläche genutzt, mit dem das erste Ende 52 des zweiten Lichtleiters 50 in Überdeckung angeordnet ist.

In dem Teilbereich wird nun eine sogenannte Hell-Dunkel-Taktung des Anzeigeelements 32 (Flüssigkeitskristallbildschirm) durchgeführt. Dies bedeutet, dass in dem Teilbereich über eine vorgebbare Zeitdauer die Intensität der im Teilbereich vom Anzeigeelement 32 abgestrahlten Lichtstrahlen variiert, d.h. innerhalb der vorgebbaren Zeitdauer über wenigstens eine erste Zeitspanne der Zeitdauer auf einen hohen Wert und in einer sich an die erste Zeitspanne anschließenden, zweiten Zeitspanne der vorgebbaren Zeitdauer auf einen demgegenüber geringen Wert, insbesondere auf Null, eingestellt wird.

Somit kommt es während der ersten Zeitspanne zu einer sogenannten Hellphase, während es in der zweiten Zeitspanne zu einer sogenannten Dunkelphase des Teilbereichs kommt. Diese Hell-Dunkel-Taktung dient zur Unterscheidung zwischen der Umgebungshelligkeit und der Anzeigehelligkeit des Anzeigeelements 32. Diese Hell-Dunkel-Taktung wird über den zweiten Lichtleiter 50 zum Erfassungselement 38 geleitet. Die Hell-Dunkel-Taktung führt zu einer entsprechenden Modulation des Auswertesignals, das vom Erfassungselement 38 an die Steuereinheit 44 übertragen wird. Durch das Erfassungselement 38 oder die Steuereinheit 44 erfolgt eine Filterung des Auswertesignals, wobei sich aufgrund der Hell-Dunkel-Taktung ein zumindest im Wesentlichen sinusförmiger Verlauf des Auswertesignals ergeben kann. Mit anderen Worten führt die Änderung der Intensität der vom Anzeigeelement 32 im Teilbereich abgestrahlten Lichtstrahlen, bewirkt durch die Hell-Dunkel-Taktung, zu einem sogenannten Helligkeitssinussignal.

Weicht die Funktionsfähigkeit des Anzeigeelements 32 von seiner gewünschten Funktionsfähigkeit ab, so kann beispielsweise eine solche Hell-Dunkel-Taktung nicht durchgeführt werden, so dass auch das Auswertesignal von dem sinusförmigen Soll-Signal abweicht. Ist dies der Fall, so kann darauf rückgeschlossen werden, dass eine Veränderung der Anzeigehelligkeit des Anzeigeelements 32 und/oder eine Veränderung eines durch das Anzeigeelement 32 anzeigbaren Werts nicht durchführbar und/oder ein anderer Wert oder eine andere Grafik als die aktuelle Uhrzeit 34 und die Reichweite 36 mittels des Anzeigeelements 32 nicht mehr anzeigbar ist. Dies wird auf dem Gebiet von Computern üblicherweise als "Einfrieren" oder als "Aufhängen" bezeichnet.

Auf ein solches "Einfrieren" des Anzeigeelements 32 in Form des Flüssigkeitskristallbildschirms kann rückgeschlossen werden, wenn mittels des Erfassungselements 38 beispielsweise kein sinusförmiges Auswertesignal, sondern ein zumindest im Wesentlichen konstantes Auswertesignal erfasst wird. Zu einem solchen, konstanten Auswertesignal kommt es beispielsweise, wenn trotz einer entsprechenden Ansteuerung des Anzeigeelements 32, um die Hell-Dunkel-Taktung zu bewirken, die Hellphase oder die Dunkelphase dauerhaft vorliegt und sich nicht mit der entsprechend daran anschließenden Dunkel- bzw. Hellphase abwechselt.

Hierdurch kann präzise auf die Funktionsfähigkeit des Anzeigeelements 32 rückgeschlossen werden, ohne ein zusätzliches Erfassungselement verwenden zu müssen.

## Patentansprüche

1. Anzeigevorrichtung (10) eines Kraftwagens, mit wenigstens einem Anzeigeelement (32), mittels welchem unter Abstrahlen von Lichtstrahlen durch das Anzeigeelement (32) zumindest ein Wert (34, 36) anzeigbar ist und welches in seiner Anzeigehelligkeit einstellbar ist, und mit einer Erfassungseinrichtung (42), welche eine Steuereinheit (44) und wenigstens ein Erfassungselement (38) zum Erfassen einer Umgebungshelligkeit einer Umgebung des Anzeigeelements (32) umfasst, wobei die Anzeigehelligkeit mittels der Steuereinheit (44) in Abhängigkeit von wenigstens einem, die erfasste Umgebungshelligkeit charakterisierenden und von dem Erfassungselement (38) an die Steuereinheit (44) übertragenen Signal einstellbar ist,
**dadurch gekennzeichnet, dass**
das Erfassungselement (38) dazu ausgelegt ist, vom Anzeigeelement (32) abgestrahlte Lichtstrahlen zu erfassen und wenigstens ein, die erfassten Lichtstrahlen charakterisierendes Auswertesignal an die Steuereinheit (44) zu übertragen, mittels welcher in Abhängigkeit von dem Auswertesignal das Anzeigeelement (32) auf dessen Funktionsfähigkeit überprüfbar ist, wobei wenigstens ein erster Lichtleiter (48) vorgesehen ist, mittels welchem dem Erfassungselement (38) Lichtstrahlen aus der Umgebung zuführbar sind, und wobei wenigstens ein zweiter Lichtleiter (50) vorgesehen ist, mittels welchem dem Erfassungselement (38) die vom Anzeigeelement (32) abgestrahlten Lichtstrahlen zuführbar sind.

2. Anzeigevorrichtung (10) nach Anspruch 1,
**dadurch gekennzeichnet, dass**
das Anzeigeelement (32) eine Anzeigefläche aufweist, über welche Lichtstrahlen vom Anzeigeelement (32) abstrahlbar sind, wobei das Anzeigeelement (32) dazu ausgelegt ist, in einem Teilbereich der Anzeigefläche die mittels des Erfassungselements (38) erfassbaren Lichtstrahlen abzustrahlen.

3. Anzeigevorrichtung (10) nach einem der vorhergehenden Ansprüche,
**dadurch gekennzeichnet, dass**
die Steuereinheit (44) dazu ausgelegt ist, eine Intensität der mittels des Erfassungselements (38) erfassbaren und vom Anzeigeelement (32) abgestrahlten Lichtstrahlen innerhalb einer vorgebbaren Zeitdauer zu variieren.

4. Anzeigevorrichtung (10) nach Anspruch 3,
**dadurch gekennzeichnet, dass**
die Steuereinheit (44) dazu ausgelegt ist, die Intensität innerhalb der vorgebbaren Zeitdauer wenigstens einmalig auf null zu reduzieren.

5. Kraftwagen mit einer Anzeigevorrichtung (10) nach einem der vorhergehenden Ansprüche.

6. Verfahren zum Betreiben einer Anzeigevorrichtung (10) eines Kraftwagens, mit wenigstens einem Anzeigeelement (32), mittels welchem unter Abstrahlen von Lichtstrahlen durch das Anzeigeelement (32) zumindest ein Wert anzeigbar ist und welches in seiner Anzeigehelligkeit einstellbar ist, und mit einer Erfassungseinrichtung (42), welche eine Steuereinheit (44) und wenigstens ein Erfassungselement (38) zum Erfassen einer Umgebungshelligkeit einer Umgebung des Anzeigeelements (32) umfasst, wobei die Anzeigehelligkeit mittels der Steuereinheit (44) in Abhängigkeit von wenigstens einem, die erfasste Umgebungshelligkeit charakterisierenden und von dem Erfassungselement (38) an die Steuereinheit (44) übertragenen Signal einstellbar ist,
**dadurch gekennzeichnet, dass**
vom Anzeigeelement (32) abgestrahlte Lichtstrahlen mittels des Erfassungselements (38) erfasst werden, von welchem wenigstens ein, die erfassten Lichtstrahlen charakterisierendes Auswertesignal an die Steuereinheit (44) übertragen wird, mittels welcher in Abhängigkeit von dem Auswertesignal das Anzeigeelement (32) auf dessen Funktionsfähigkeit überprüft wird, wobei wenigstens ein erster Lichtleiter (48) vorgesehen ist, mittels welchem dem Erfassungselement (38) Lichtstrahlen aus der Umgebung zugeführt werden, und wobei wenigstens ein zweiter Lichtleiter (50) vorgesehen ist, mittels welchem dem Erfassungselement (38) die vom Anzeigeelement (32) abgestrahlten Lichtstrahlen zugeführt werden.

## Claims

1. Display device (10) of a motor vehicle, comprising at least one display element (32), by means of which from the radiation of light rays through the display element (32) at least one value (34, 36) can be displayed and in which display element the brightness of the display can be adjusted, and comprising a detection device (42) which comprises a control unit (44) and at least one detecting element (38) for detecting the ambient brightness of the surroundings of the display element (32), wherein the brightness of the display can be adjusted by means of the control unit (44) as a function of at least one signal characterising the detected ambient brightness and transmitting from the detecting element (38) to the control unit (44), **characterised in that** the detecting element (38) is set up to detect light rays emitted by the display element (32) and to transmit at least one evaluation signal characterising the detected light rays to the control unit (44), by means of which as a function of the evaluation signal the display element (32) can be checked for functionality, wherein at least one first light conductor (48) is provided by means of which light rays can be supplied from the surroundings to the detecting element (38) and wherein at least one second light conductor (50) is provided by means of which the light rays radiated from the display element (32) can be supplied to the detecting element (38).

2. Display device (10) according to claim 1, **characterised in that** the display element (32) has a display surface over which light rays from the display element (32) can be radiated, the display element (32) being designed to radiate the light rays detectable by means of the detecting element (38) in a part area of the display surface.

3. Display device (10) according to any one of the preceding claims, **characterised in that** the control unit (44) is designed to vary the intensity of the light rays detectable by means of the detecting element (38) and emitted by the display element (32) within a predetermined period of time.

4. Display device (10) according to claim 3, **characterised in that** the control unit (44) is designed to reduce the intensity to zero at least once within the predetermined period of time.

5. Motor vehicle comprising a display device (10) according to any one of the preceding claims.

6. Method for operating a display device (10) of a motor vehicle, comprising at least one display element (32), by means of which by emitting light rays through the display element (32) at least one value can be displayed and the brightness of the display can be adjusted and comprising a detection device (42) comprising a control unit (44) and at least one detecting element (38) for detecting the ambient brightness of the surroundings of the display element (32), wherein the brightness of the display can be adjusted by means of the control unit (44) as a function of at least one signal characterising the detected ambient brightness and transmitting from the detecting element (38) to the control unit (44), **characterised in that** light rays emitted by the display element (32) are detected by means of the detecting element (38) from which at least one evaluation signal characterising the detected light rays is transmitted to the control unit (44), by means of which as a function of the evaluation signal the display signal (32) is checked for functionality, wherein at least one first light conductor (48) is provided by means of which light rays from the surroundings are supplied to the detecting element (38) and wherein at least one second light conductor (50) is provided, by means of which light rays emitted by the display element (32) are supplied to the detecting element (38).

## Revendications

1. Dispositif d'affichage (10) d'un véhicule automobile, avec au moins un élément d'affichage (32) au moyen duquel au moins une valeur (34, 36) peut être affichée par l'élément d'affichage (32) par émission de rayons lumineux et dont la luminosité d'affichage est réglable et avec un dispositif de détection (42) qui comprend une unité de commande (44) et au moins un élément de détection (38) pour détecter une luminosité ambiante d'un environnement de l'élément d'affichage (32), la luminosité d'affichage étant réglable au moyen de l'unité de commande (44) en fonction d'au moins un signal caractérisant la luminosité ambiante détectée et transmis par l'élément de détection (38) à l'unité de commande (44),
**caractérisé en ce que** l'élément de détection (38) est conçu pour détecter des rayons lumineux émis par l'élément d'affichage (32) et pour transmettre au moins un signal d'évaluation caractérisant les rayons lumineux détectés à l'unité de commande (44) au moyen de laquelle la capacité à fonctionner de l'élément d'affichage (32) peut être vérifiée en fonction du signal d'évaluation, au moins une première fibre optique (48) étant prévue, première fibre optique au moyen de laquelle des rayons lumineux provenant de l'environnement peuvent être conduits à l'élément de détection (38), et au moins une deuxième fibre optique (50) étant prévue, deuxième fibre optique au moyen de laquelle les rayons lumineux émis par l'élément d'affichage (32) peuvent être conduits à l'élément de détection (38).

2. Dispositif d'affichage (10) selon la revendication 1, **caractérisé en ce que** l'élément d'affichage (32) comporte une surface d'affichage par l'intermédiaire de laquelle des rayons lumineux peuvent être émis par l'élément d'affichage (32), l'élément d'affichage (32) étant conçu pour émettre dans une zone partielle de la surface d'affichage les rayons lumineux détectables au moyen de l'élément de détection (38).

3. Dispositif d'affichage (10) selon l'une des revendications précédentes, **caractérisé en ce que** l'unité de commande (44) est conçue pour modifier pendant un intervalle de temps pouvant être prescrit une intensité des rayons lumineux émis par l'élément d'affichage (32) et détectables au moyen de l'élément de détection (38).

4. Dispositif d'affichage (10) selon la revendication 3, **caractérisé en ce que** l'unité de commande (44) est conçue pour réduire au moins une fois à zéro l'intensité pendant l'intervalle de temps pouvant être prescrit.

5. Véhicule automobile avec un dispositif d'affichage (10) selon l'une des revendications précédentes.

6. Procédé de fonctionnement d'un dispositif d'affichage (10) d'un véhicule automobile, avec au moins un élément d'affichage (32) au moyen duquel au moins une valeur peut être affichée par l'élément d'affichage (32) par émission de rayons lumineux et dont la luminosité d'affichage est réglable et avec un dispositif de détection (42) qui comprend une unité de commande (44) et au moins un élément de détection (38) pour détecter une luminosité ambiante d'un environnement de l'élément d'affichage (32), la luminosité d'affichage étant réglable au moyen de l'unité de commande (44) en fonction d'au moins un signal caractérisant la luminosité ambiante détectée et transmis par l'élément de détection (38) à l'unité de commande (44),
**caractérisé en ce que** des rayons lumineux émis par l'élément d'affichage (32) sont détectés au moyen de l'élément de détection (38) par lequel au moins un signal d'évaluation caractérisant les rayons lumineux détectés est transmis à l'unité de commande (44) au moyen de laquelle la capacité à fonctionner de l'élément d'affichage (32) peut être vérifiée en fonction du signal d'évaluation, au moins une première fibre optique (48) étant prévue, première fibre optique au moyen de laquelle des rayons lumineux provenant de l'environnement peuvent être conduits à l'élément de détection (38), et au moins une deuxième fibre optique (50) étant prévue, deuxième fibre optique au moyen de laquelle les rayons lumineux émis par l'élément d'affichage (32) peuvent être conduits à l'élément de détection (38).
